# EUROPEAN PATENT SPECIFICATION

(11) **EP 1 190 284 B1**
(45) Date of publication and mention of the grant of the patent: **07.02.2007**
(21) Application number: 00928912.5
(22) Date of filing: 08.05.2000
(51) Int. Cl.: G05D 23/13

(54) **THERMOSTATIC MIXING VALVE**
THERMOSTATISCHES MISCHVENTIL
MITIGEUR THERMOSTATIQUE

(30) Priority: 07.05.1999 IT TO990371; 31.05.1999 IT TO990455
(43) Date of publication of application: 27.03.2002
(73) Proprietor: MASCO CORPORATION, Taylor, MI 48180 (US)
(72) Inventor: KNAPP, Alfons, D-88400 Biberach/Riss (DE)
(74) Representative: Oppermann, Mark
(86) International application number: PCT/US2000/012529
(87) International publication number: WO 2000/068754

(56) References cited:
- WO-A-97/01807
- US-A- 3 987 819
- US-A- 4 327 758
- US-A- 4 877 181
- US-A- 4 892 017
- US-A- 5 505 225
- US-A- 5 931 374

## Description

### TECHNICAL FIELD

The field of this invention relates to a thermostatic mixing valve and more particularly to a thermostatically controlled mixing valve with a volume control feature incorporated therein.

### BACKGROUND OF THE DISCLOSURE

Mixing valves are well known and common in the plumbing field. These valves provide a flow of mixed water from separate hot and cold water supplies. Secondly, thermostatic control for handle mixer valves is well known. One reason for thermostatic control is to eliminate constant readjustment of the valve when the temperature of the hot water supply fluctuates. The temperature of the hot water supply may vary substantially. Furthermore, the pressure within the cold water line may also vary changing the proportions of hot and cold water flow and thereby fluctuating the temperature of the mixed water.

Known thermostatic valves have packaging problems and are often significantly bulkier than standard mixing valves that do not incorporate the thermostatic regulation. This bulkiness is due to the flow path that has always been used for thermostatic faucets, namely the supply inlets approach the centrally located thermostatic valve from a radially outer position.

When thermostatic valves are incorporated into mixer valves, the volume or flow control valves may be installed either downstream or upstream from the thermostatic valve element. When the flow is regulated downstream of the thermostatic element within the mixed water flow, installation of non-return valves is needed in order to prevent the possibility of communication between the hot water supply and the cold water supply. When the flow control of the hot and cold water supplies is upstream of the thermostatic valve before the water is mixed, the non-return valves are not needed. For this economic reason, most thermostatic mixing valves have the volume control upstream of the thermostatic element.

However when the flow is regulated with respect to the hot and cold water supplies, the thermostatic device is unable to maintain the constant temperature due to the variations of the flow rates. It is well known that when hot and cold water supply pressures are approximately equal or with the hot supply pressure being only slightly lower than the cold water pressure, the difference in flow rate or variation between the hot and cold water supplies is increased when the total flow is reduced and the rise in temperature can sometimes become significant. On the other hand, if the hot water supply pressure is substantially lower than the cold water supply pressure, as is often the case due to the increased corrosion of the hot water pipelines, the difference in the flow rate or variation of the flow rate between the hot and cold water supplies is decreased as the total flow rate is reduced.

Contoured apertures in a pair of disc plate valves have been known to contour the water flow profile between the hot and cold water supplies. However, these plate valves are set to move both rotatably and translationally with respect to each other to mechanically control both the total flow rate and the temperature mix of the hot and cold water.

A thermostatic mixing valve has been developed that includes two inlets for hot water and cold water, a mixing chamber, passages between the inlets and the mixing chamber, an outlet for the mixed water which runs from the mixing chamber, an expanding thermostatic element placed, at least in part, within the outlet so that it will be in contact with the mixed water. A slide valve is activated by the thermostatic element and acts on one or both of the inlet passages to maintain the mixed water at a constant temperature. The inlets are located in a central body situated inside the slide valve activated by the thermostatic element. A pair of valve plates crossed by passages for the water are positioned to control total flow rate through the inlets for the hot water and cold water without affecting the outlet for the mixed water. The valve plates are controlled by rotation of an external body or housing of the thermostatic mixing valve. A thermostatic mixing valve of this kind has proved to be very advantageous, yet (like other types of thermostatic mixing valve) it can prove to be inconvenient in certain conditions.

If a thermostatic mixing valve, which is designed to be able to deliver a determined rate of flow, supplies a device downstream which, due to its own high resistance only allows delivery of a much lower rate of flow, the fall in pressure at the inlet produced by the pair of valve plates is greatly reduced in comparison to the fall in pressure at the inlet produced by the downstream device and the pressure inside the thermostatic mixing valve is close to the pressure in the supply pipes. If a considerable difference in pressure then occurs between the hot and cold water supplies, for example because of the actuation of a device with high rate of flow that uses primarily hot or cold water upstream from the thermostatic valve, the valve will then be unstable and will start to oscillate, because of the cross-flow which occurs inside the thermostatic valve. The oscillation will cause malfunctioning and temperature instability in the mixed water delivery downstream from the thermostatic valve. This situation may occur when a thermostatic mixing valve is designed to supply a relatively high rate of flow, such as for example 50 or 60 liters per minute at 3 bars but is used with a much lower delivery rate, for example 9 liters per minute due to the resistance or restriction at the outlet on certain downstream devices. This situation occurs, for example, when the thermostatic mixing valve is installed to supply a bank with multiple outlets, each of which is equipped with its own on/off valve, and the user makes use of only one outlet. More generally, the situation occurs when the thermostatic mixing valve is capable of supplying many devices and only one or a few of these devices are actually in operation at any given time.

In fact, the user could in theory prevent this instability by accurate regulation of the thermostatic mixing valve, so as to create a resistance at the inlet that is proportional to the resistance at the outlet. However, this is not possible in practice, because well-known thermostatic mixing valves do not offer sufficiently sensitive regulation at low rates of flow. Furthermore, since the rate of flow is limited at the outlet of a device with high restriction or resistance, the user is not aware of the effect of the regulation at the downstream device and is therefore not in a position to decide whether the regulation he has carried out is adequate to avoid the noted problem.

This problem which also occurs with other kinds of thermostatic mixers, has usually been remedied by installing a pressure controller in the supply pipes upstream of the thermostatic mixing valve. This pressure controller, however, increases the size, complexity and expense of the installation and renders the device less reliable.

Document WO-A-97 01807 forming the preamble portion of claim 1 discloses a thermostatic mixing valve comprising, amongst others, two flow control ceramic discs which have ports to adjust the water flow from a closed to a full open position. The first, fixed disc has respective cold and hot supply ports which differ from each other, whereas the second, movable disc comprises a cold water inlet and a hot water inlet both having an arched shape with constant width. To be more precise the fixed disc comprises a contoured hot supply port which has a wide section and a narrow section that provide varying flow adjustment with respect to the other, i.e. the cold supply port which has an arched shape with constant width as well. Consequently, the hot water supply flow volume is reduced or throttled at the beginning of the regulation action by a greater amount than the throttling of the cold water supply flow. This difference in throttling counteracts the tendency toward a rise in the temperature of the mixed water in terms of diminishing the mixed water flow rate.

Moreover, document US-A-4 877 181 discloses an apparatus for mixing two fluids of different temperatures, and controlling the resultant temperature and total flow volume. This apparatus comprises a mixing valve having a rotatable element in a fitted case which has two adjacent fluid inlets and an elongated fluid outlet. The rotatable element has a throat therethrough and is rotatable to position one end of the throat in register with both of the fluid inlets, or to block either of the fluid inlets to a variable degree, whilst the second end of the throat is in approximate register with the fluid outlet. The apparatus further has a pivot arm contained in the fluid outlet, connected to one end to the rotatable element, and at the second end to a first control shaft. In addition a flow valve is provided in the fluid outlet, downstream from the pivot arm, which has a second control shaft. Finally, a control dial is mounted on the exterior of the case, having two control levers and a dial face with means for indicating the positions of the levers which in turn are connected to the two control shafts.

What is needed is a compact thermostatic mixing valve that is easily assembled and controls the temperature of the mixed water output. What is also needed is a thermostatic control built into a valve with flow control that provides proper thermostatic control at a wide range of flow rates.

### SUMMARY OF THE DISCLOSURE

The object of the present invention is to provide a thermostatic mixing valve the operation of which is stable to even significant differences in pressure between the supply pipes. This object is solved by the features indicated in claim 1. Advantageously developed embodiments of the invention are subject-matter of the dependent claims 2 to 8.

A thermostatic mixing valve comprises a base having two supply ports for cold water and hot water, respectively. A rotatable handle body is mounted onto the base and operably connected to a first valving surface with a cold water and hot water inlet passage therethrough that are operably positioned adjacent the two supply ports for controlling volume flow into the thermostatic mixing valve. A thermostatic element is operably connected to a movable second valving surface that is movable between first and second seats for controlling the relative flow from the cold and hot water inlet passages in response to the temperature of fluid in a mixing chamber. The ports and the first valving surface are incorporated in two concentrically mounted valve plates that can be rotated with respect to each other and that are each provided with two openings therethrough for the controlled passage of the fluid through the two valve plates. According to the invention, the two openings in one of the valve plates have an identical shape and size, with two distinct sections so as to subdivide the entire field of regulation determined by the relative rotation of the valve plates into at least two successive fields of regulation, the first field of regulation, adjacent to the shut off position, being determined in the respective opening by a first inlet passage aperture section of restricted flow, and the second field of regulation, after the first, being formed in the respective opening by a second inlet passage aperture section having an enlarged cross section. Thus, the first and second fields of regulation are inserted into both the hot water and cold water passages.

When the thermostatic mixing valve has to supply one or more devices, which provide a low flow rate, it is positioned into its first field of regulation, which occurs as soon as the thermostatic mixing valve is moved from its closed position. The narrow sections of the inlet passage openings then cause a relatively marked fall in pressure, even in the presence of a low flow rate caused by high resistance at the outlet, and render the thermostatic mixing valve practically and advantageously stable to even significant differences in pressure between the supply pipes. When the thermostatic mixing valve is used to supply devices with large flow rates, the thermostatic valve is positioned to its second field of regulation. The wide sections of the inlet openings enable delivery of large flow rates. Under the condition, any differences in pressure between the hot and cold supply, even if significant, do not cause temperature fluctuation problems.

It is desirable to provide a discrete third intermediate field of regulation which is interposed between the first and second inlet passage aperture sections.

In one embodiment of the invention, the openings are each in the form of an elongated slot having an initial length of reduced width forming the first inlet passage aperture section and a final length of enlarged width forming the second inlet passage aperture section, there being provided a discrete intermediate length of intermediate width between the first reduced width of the first inlet passage aperture section and the second enlarged width of the second inlet passage aperture section.

In another embodiment of the invention, the openings are each in the form of an elongated slot of large and uniform width, the slot having a section fully extending through the valve plate and forming the second inlet passage aperture section, and a stepped section of limited depth not fully passing through the valve plate and forming the first inlet passage aperture section, the slot further having an intermediate section of greater depth than that of the stepped section, but not passing fully through the valve plate, the intermediate section being interposed between the second inlet passage aperture section and the stepped section.

In still another embodiment of the invention, the openings each have a wide section fully extending through the valve plate and forming the second inlet passage aperture section, and a stepped section of limited depth adjacent the narrow first inlet passage aperture section.

It is desirable to provide visible indicators which are mounted on the thermostatic mixing valve and inform the user as to which field of regulation the thermostatic mixing valve is operating in.

Finally, at least one elastic release device suitable for giving a sensory warning to the user of the passage from one field of regulation to another field of regulation of the thermostatic mixing valve may be provided, the elastic release device being inserted between relatively moving parts of the thermostatic mixing valve. The elastic release device may comprise a spring biased ball that is seated in a first part of the body of the thermostatic mixing valve and that can be biased into one or more cavities which face it that are located in a second part of the body of the thermostatic mixing valve. This device is useful in making it very easy for the user to identify the field of regulation of the thermostatic mixing valve which is most suitable.

### BRIEF DESCRIPTION OF THE DRAWINGS

Reference now is made to the accompanying drawings in which:
Figure 1 is a side-segmented view of a thermostatic mixing valve in accordance with one embodiment of the invention;
Figure 2 is a top perspective view of a fixed plate for the flow rate regulation shown in Figure 1;
Figure 3 is a top perspective view of the movable plate shown in Figure 1;
Figures 4A and 4B illustrate the movable and fixed valve plates in their relative closed positions;
Figures 5A and 6A illustrate the movable valve plate in two different operating positions.
Figures 5B and 6B illustrate the relative position of the fixed plate and movable valve plate positioned behind the fixed plate;
Figure 7 illustrates a second embodiment of the movable plate;
Figure 8 is a bottom perspective view of a third embodiment of the movable valve plate;
Figure 9 is a segmented view showing the movable plate according to Figure 8 in the fully open position with respect to the fixed plate;
Figure 10 is a view similar to Figure 8 illustrating a fourth embodiment;
Figure 11 is a view similar to Figure 9 for the fourth embodiment;
Figure 12 is a view similar to Figure 8 illustrating a fifth embodiments.

### DETAILED DESCRIPTION OF THE PREFERRED EMBODIMENT

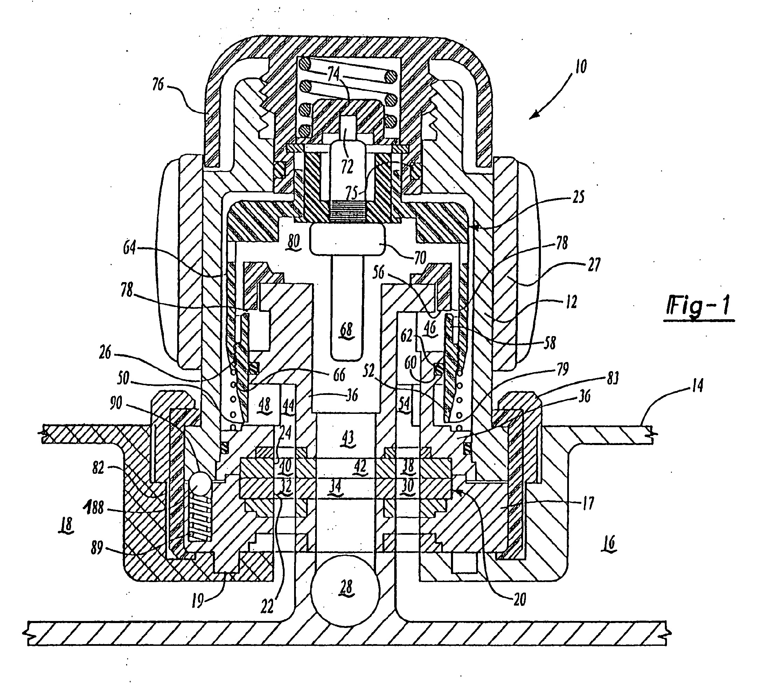

Referring to Figure 1, a thermostatic mixing valve 10 includes a rotatable body 12 that is rotatably mounted in piping fixture or other suitable piping fixture 14. The piping fixture 14 includes a cold water supply 16 and hot water supply 18. The handle body 12 is rotatably mounted to a faucet base 17 that is affixed within the fixture 14. The base 17 has a positioning lug 19 seated in a lug receiving hole in fixture 14. The mixing valve includes a flow rate control valve 20 that includes two ceramic disc plates 22 and 24. Fixed ceramic disc plate 22 is mounted in base 17. Rotatable ceramic disc plate 24 is mounted to a bottom of a cartridge assembly 25. The cartridge assembly 25 includes a thermostatic controlled second valve 26 mounted downstream from the flow control valve 20 within the handle body 12 to control the temperature of the mixed water flowing to an outlet passage 28. The thermostatic valve is described in detail in PCT Publications WO 95/30940 and 95/30939.

The fixed ceramic disc plate 22 has respective cold and hot supply ports 30 and 32 and a centrally located mixed water outlet port 34. The ceramic disc plate 24 is affixed to the rotatable handle body 12 via an internal body member 36 of the cartridge assembly 25 for rotation with the handle body 12. The movable ceramic disc plate 24 has a cold water inlet 38 and hot water inlet 40 and a centrally located outlet aperture 42 that is in constant alignment with outlet port 34 of fixed ceramic disc plate 22. The rotation of the handle body 12 rotates the ceramic disc plate 24 with respect to disc plate 22 to selectively align or misalign the inlet 38 and 40 with inlets 30 and 32 to control the total flow rate of the hot and cold water. The handle body 12 may be circumscribed with a thermally insulating handle sleeve 27 that functions as the handle.

The internal body member 36 has a hot water inlet passage 44 aligned with the hot water inlet 40 and a cold water inlet passage 46 aligned with the cold water inlet 42. A central mixed water outlet 43 is in alignment with outlets 42, 34 and 28. The passage 44 has an annular shaped downstream end 48 adjacent an annular valve seat 50 in internal body member 36 and the axial lower end 52 of thermostatically controlled valve 26 which is annular in shape. The passage 46 has an annular shaped downstream end 54 adjacent an annular valve seat 56 and the axial upper end 58 of the annular shaped valve 26. Valve seat 56 is secured to the internal body member 36. The passage 46 passes axially through the annular valve 26 within its radial confines. The internal body member 36 has an intermediate seal seat 60 that seats a seal 62 that seals off the passage 44 from 46 within the axial extent of the annular valve 26.

The annular valve 26 is affixed to a collar 64 via a threaded engagement. A spring 66 biases the valve 26 to engage the seat 56 and close off passage 46. The collar 64 extends above the internal body section 36 and is operatively affixed to body section 68 of thermostatic element 70. The thermostatic element has an expanding piston leg 72 that engages a safety spring release seat 74 that is mounted in adjustment handle 76. The adjustment handle 76 is screwed onto handle body 12 with an appropriate seal 75 for mechanically raising and lowering the thermostatic assembly 70 within the cartridge assembly 25. The body section 68 may extend into the central outlet passage 42 of the internal body 36.

The cartridge assembly 25 maintains its structural integrity because the annular valve 26 is entrapped between the internal body valve seat 50 and the upper seat 56. The thermostatic element 70 is affixed to the collar 64 which in turn is affixed to the annular valve 26. The spring element 66 is also entrapped between the internal body 36 and the valve 26.

A retaining ring 82 is provided which, when it is inserted, firmly assembles the external body 12 of the device, the internal body 36 and the faucet base member 17. The retaining ring 82 can be made from plastic material and may conveniently be fixed with an elastic release. The plastic material may have a low coefficient of friction, so that the retaining ring 82 also has the function of limiting friction when the thermostatic mixing valve 10 is rotated to regulate the rate of flow. In this way the entire thermostatic mixing valve 10 assumes the character of a cartridge which can be installed and removed from the piping fixture 14 without entailing any disassembly of its parts. This same characteristic enables the entire device to be assembled independently of the inlet during manufacture, and the two parts to be stored separately in the warehouse. A locking ring 83 is then screwed into piping fixture 14 to mount the thermostatic valve 10 in place.

The water flow from the cold water supply 16 passes up through the control valve 20 and axially upward through the internal body member with the cold water passing radially outward through the adjustably sized gap 78 between the seat 56 and annular valve 26 and into mixing chamber 80. The flow path from the hot water supply 18 passes through the control valve 20 and axially upward through the internal body member with the hot water passing radially outward through the adjustably sized gap 79 between the seat 50 and annular valve 26 to mixing chamber 80.

The water thereafter is mixed and passes back radially inwardly to the center outlet passage 42 and out of the cartridge 25 and mixing valve 10. The thermostatic adjustment automatically slides the valve 26 axially to adjust the size of the two gaps 78 and 79. The specific internal construction of the thermostatic element 70 is well known in the art and is commercially available.

The volume control valve 20 when in the closed position prevents any communication between water supplies 16 and 18 and thus the faucet need not be provided with non-return valves.

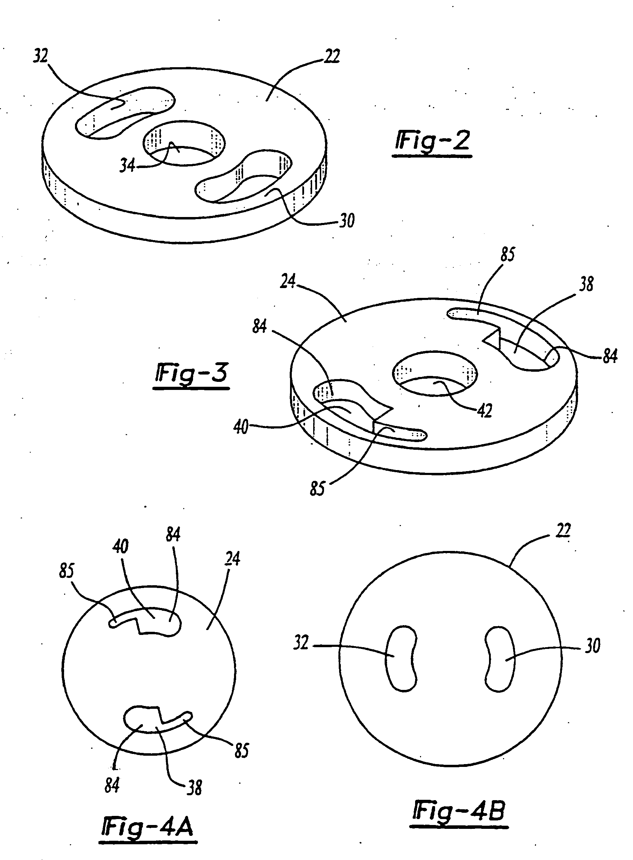

Reference now is made to Figures 2-6 for a more detailed description of the ceramic disc plates 22 and 24 and the shape and operation of the ports 30 and 32 in the fixed plate 22 and inlets 38 and 40 in the movable plate. For ease of illustration, the two plates are shown, as having different diameters in Figures 4-6 but it is understood that the diameters of the respective plates are not critical to the invention and they may have the same diameter.

These apertures 38 and 40 in movable plate 24 are shaped so as to subdivide the entire field of regulation determined by the relative rotation of the plates into at least two distinct successive fields. The first field of regulation, adjacent to the shut off position, is determined by a respective inlet passage aperture of narrow section, inserted in the pipes for hot water and cold water respectively. The second field of regulation is determined by inlet passage apertures of larger flow section, inserted in both the hot water and cold water pipes. It is not necessary to use inlet passage apertures having special shapes in both valve plates. One of the valve plates, for example the fixed valve 22, illustrated in Figure 2, can have, at the side of a central passage aperture 34 for mixed water (which however may be absent in other forms of the embodiment), two inlet hot and cold passage apertures 30 and 32 having normal shape with an elongated curved slot. This is therefore effectively a valve plate of normal conventional construction.

The characteristic structures of the invention however concern the other valve plate, for example, the moveable valve plate 24. The passage apertures having a narrow section 85, which determine the first field of regulation are inserted into both the passages for hot water and cold water. Embodiments in which the passage apertures of narrow section which determine the first field of regulation are inserted into both the hot water and cold water pipes are described with reference to Figures 3 to 12.

The valve plate 24, shown in the first embodiment in Figure 3, has, at the sides of a central aperture 42 for mixed water two hot and cold passage apertures 38 and 40 made with wide sections 84 and narrow sections 85 to determine the different fields of regulation of the valve. In this form of embodiment, narrow section 85 and wide section 84 each pass complete 14 through the valve plate. Figures 4A, 4B, 5A, 5B, 6A and 6B (in which for simplicity and clarity of the drawings, the central outlet apertures 34 and 42 have been omitted) illustrate how these valve plates 22 and 24 work together.

Figures 4A and 4B respectively illustrate the moveable plate 24 and the fixed plate 22 in their relative shut off or closed positions. It will be understood that when these valve plates are placed one above the other in this relative position, their inlet passage apertures, respectively 30, 32, 38 and 40 do not align and the flow of the thermostatic mixing valve is completely shut off.

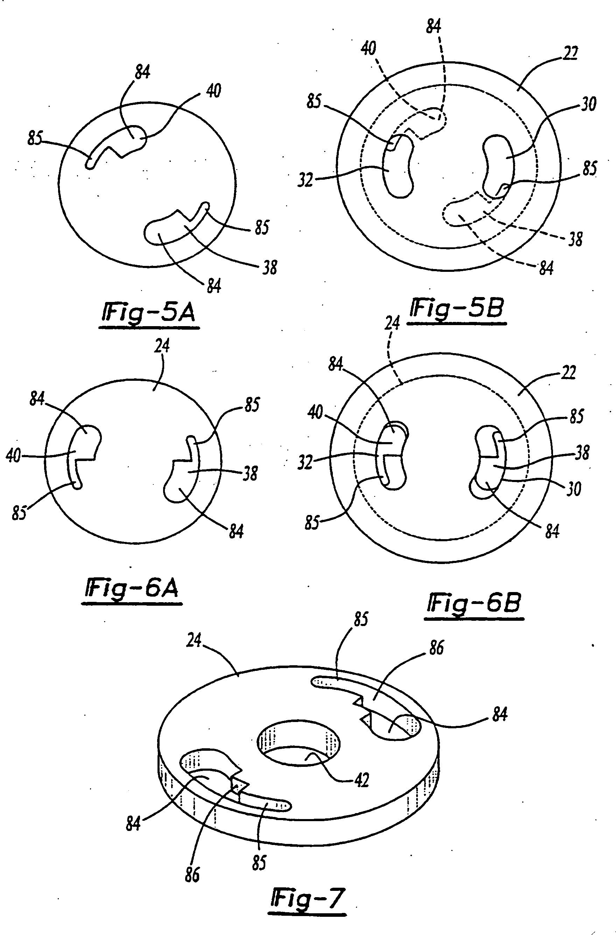

If the moveable plate 24 is made to rotate to a position shown in Figure 5A, and it is placed against the fixed plate 22 as shown in Figure 5B, only a greater or lesser part of the narrow sections 85 of the moveable plate 24 correspond to the respective inlet passage apertures 30 and 32 of the fixed pate 22. The moveable plate 24 when in this position determines a field of regulation for the thermostatic mixing valve in which the inlets of hot water and cold water are greatly restricted. Consequently, even if the delivered flow rate is reduced due to a high restrictive delivery outlet, a significant drop in pressure occurs when the water passes through the inlet passage apertures of valve plates 22 and 24, and the pressure inside the mixing chamber 80 of the valve is then greatly reduced in relation to the pressures in the supply pipes. This significant drop in pressure at the inlet renders the valve practically insensitive (for purposes of its stability) to differences in pressure, even large ones, which may occur between the supply pipes that may otherwise cause occurrences of instability. It is obvious on the other hand that under these conditions the valve is not capable to supply a plurality of devices which together require a high rate of flow. This field of regulation is suitable for supply to a single outlet of a bank of multiple outlets.

If the moveable plate 24 is then made to rotate to a position like that shown in Figure 6A, and it is placed above the fixed plate 22 as shown in Figure 6B, a greater or lesser part of the wide sections apertures 84 of apertures 38 and 40 in the moveable plate 22 aligns with the inlet passage apertures 30 and 32 of the fixed plate 22. The moveable plate 22 when in this position determines a field of regulation for the thermostatic mixing valve in which the inlets for hot water and cold water are only slightly restricted and are operable for high flow rates. Consequently, in this field of regulation, the thermostatic mixing valve is capable of supplying several devices, or devices which require a high flow rate. This field of regulation is suitable for the simultaneous supply of a bank of multiple outlets.

The user can therefore set the thermostatic mixing valve to function properly in different conditions simply by rotating the body of the thermostatic mixing valve to a selection position. This rotating action corresponds to the normal action for regulating the flow rate of a faucet and is therefore easy and instinctive. It may be desirable to provide signs or indicators on the visible parts of the thermostatic mixing valve to tell the user if the thermostatic mixing valve is operating for low flow rates or for higher flow rates.

It would seem beneficial in any case to give the user a sensory indication of passage from one field of regulation of the thermostatic mixing valve to another field, for example by means of an index release system. An index mechanism between two relatively mobile parts of the thermostatic mixing valve can be provided. For example, in Figure 1, in the base 17 there is a ball 188 biased by a spring 89, which works together with indentations 90 on the external body 12 of the thermostatic mixing valve 10, so as to produce detent stops which can be resiliently overridden which correspond to the passage from one field of regulation to another. This device makes it easier for the users to tactly determine the correct field of regulation for the thermostatic mixing valve.

It may be desirable to provide an intermediate field of regulation with an intermediate flow rate interposed between the field of regulation with low flow rate and a field of regulation with a high flow rate. In such cases it may be necessary to shape the inlet apertures 38 and 40 of the moveable plate 24 as illustrated in Figure 7. Aperture sections 86 with an intermediate width between the widths of aperture sections 84 and aperture sections 85 are interposed between the aperture sections 84 and 85. In this case there are three fields of regulation of the thermostatic mixing valve instead of two.

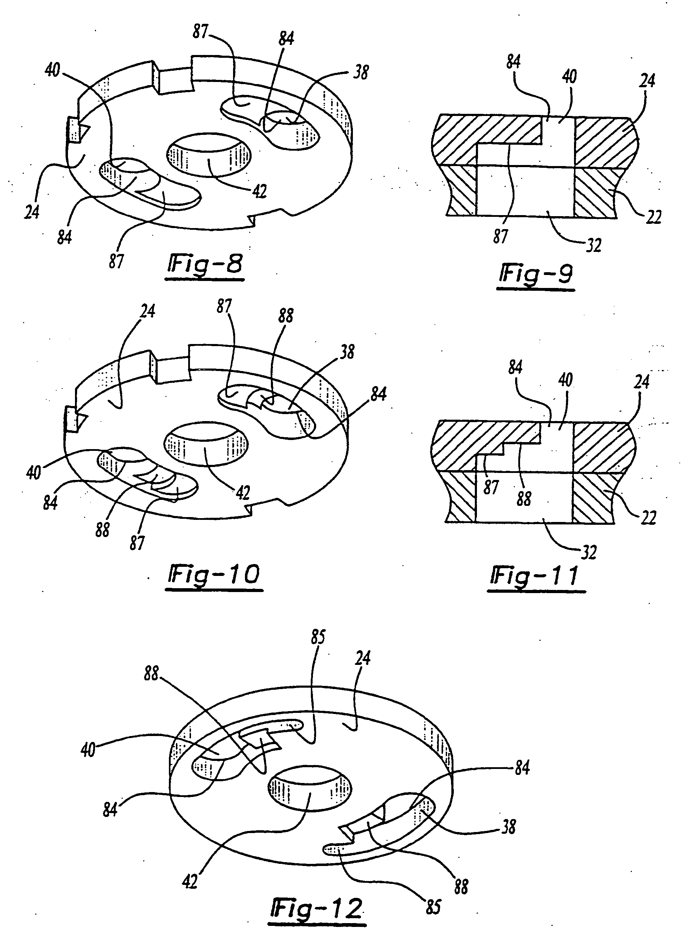

Reference now is made to the embodiment illustrated in Figure 8. The inlet apertures 38 and 40 have wide areas 84 fully passing through plate 24. Stepped sections 87 do not pass completely through the plate 24 and have relatively reduced depth. These stepped sections 87 act in the same fashion, as the narrow section 85 shown in Figure 3. In fact, the flow which comes from apertures 30 and 32 of the fixed plate 22 runs into these stepped sections 87, and is diverted towards the wide aperture sections 84. However, the flow is greatly restricted due to the limited depth of the stepped sections 87. Operation is therefore identical to that described with reference to the form of embodiment in Figure 3. However, mass production of the plate shown in Figure 8, without the narrow sections 85 may prove to be industrially more expeditious and its structure may be more durable.

Reference now is made to the embodiment illustrated in Figures 10 and 11 which is constructed to give three fields of regulations. For this purpose lies an intermediate ed section 88 between the wide crossing apertures 84 and stepped section 87 of limited depth. The depth of stepped section 88 is greater than that of stepped section 87. As explained in relation to the preceding example, operation proves identical to that of the form of embodiment shown in Figure 7, having three aperture sections of different widths.

Reference now is made to the embodiment shown in Figure 12 where the design criteria for the preceding forms of embodiment are combined. In this case, each inlet apertures 38 and 40 has a wide section 84 that completely passes through plate 24. A narrow slot section 85 also fully passes through plate 24. A stepped section 88 lies adjacent the slot 85 and is of limited depth. It will be understood that this form of embodiment performs in the same way as the forms of embodiment shown in Figures 7 and 10.

It must be understood that the invention is not limited to the forms of embodiment described and illustrated as examples. Several modifications besides those already described are within the capability of a person qualified in the field. For example, the special shapes can be formed in the inlet passage apertures of the fixed valve plate, rather than of the moveable valve plate or they may involve both plates. Different methods from those described could be chosen to give the user a visual, tactile or other sensory warning of passage from one to another field of regulation.

In this fashion, a thermostatic valve for a mixing faucet is able to correct the temperature of the outlet water for more varieties of plumbing conditions and water supplies. The invention increases the viability of thermostatic control valves where its mere action without the inventive concept is not sufficient to maintain the outlet water at the preselected or desired temperature.

Other variations and modifications are possible without departing from the scope of the present invention as defined by the appended claims.

## Claims

1. A thermostatic mixing valve (10), comprising:
a base (17) having two supply ports (30, 32) for cold water and hot water, respectively;
a rotatable handle body (12, 27) mounted onto said base (17) and operably connected to a first valving surface with a cold water and hot water inlet passage (38, 40) therethrough that are operably positioned adjacent said two supply ports (30, 32) for controlling volume flow into said thermostatic mixing valve (10); and
a thermostatic element (70) operably connected to a movable second valving surface that is movable between first and second seats (50, 56) for controlling the relative flow from said cold and hot water inlet passages (38, 40) in response to the temperature of fluid in a mixing chamber (80);
said ports (30, 32) and said first valving surface being incorporated in two concentrically mounted valve plates (22, 24) that can be rotated with respect to each other and that are each provided with two openings therethrough for the controlled passage of the fluid through said two valve plates (22, 24);
**characterised in that** said two openings in one of said valve plates (22, 24) have an identical shape and size, with two distinct sections so as to subdivide the entire field of regulation determined by the relative rotation of said valve plates (22, 24) into at least two successive fields of regulation, the first field of regulation, adjacent to the shut off position, being determined in the respective opening by a first inlet passage aperture section (85; 87) of restricted flow, and the second field of regulation, after the first, being formed in the respective opening by a second inlet passage aperture section (84) having an enlarged cross section.

2. A thermostatic mixing valve (10) according to claim 1, wherein a discrete third intermediate field of regulation is interposed between said first (85; 87) and second (84) inlet passage aperture sections.

3. A thermostatic mixing valve (10) according to claim 1, wherein said openings are each in the form of an elongated slot having an initial length of reduced width forming said first inlet passage aperture section (85) and a final length of enlarged width forming said second inlet passage aperture section (84), there being provided a discrete intermediate length of intermediate width between the first reduced width of said first inlet passage aperture section (85) and the second enlarged width of said second inlet passage aperture section (84).

4. A thermostatic mixing valve (10) according to claim 1, wherein said openings are each in the form of an elongated slot of large and uniform width, said slot having a section fully extending through said valve plate (24) and forming said second inlet passage aperture section (84), and a stepped section (87) of limited depth not fully passing through said valve plate (24) and forming said first inlet passage aperture section, said slot further having an intermediate section (88) of greater depth than that of said stepped section (87), but not passing fully through said valve plate (24), said intermediate section (88) being interposed between said second inlet passage aperture section (84) and said stepped section (87).

5. A thermostatic mixing valve (10) according to claim 1, wherein said openings each have a wide section fully extending through said valve plate (24) and forming said second inlet passage aperture section (84), and a stepped section (88) of limited depth adjacent said narrow first inlet passage aperture section (85).

6. A thermostatic mixing valve (10) according to one of the preceding claims, wherein visible indicators are mounted on said thermostatic mixing valve (10) which inform the user as to which field of regulation the thermostatic mixing valve (10) is operating in.

7. A thermostatic mixing valve (10) according to one of the claims 1 to 5, wherein at least one elastic release device suitable for giving a sensory warning to the user of the passage from one field of regulation to another field of regulation of the thermostatic mixing valve (10) is provided, said elastic release device being inserted between relatively moving parts of said thermostatic mixing valve (10).

8. A thermostatic mixing valve (10) according to claim 7, wherein said elastic release device comprises a spring (89) biased ball (188) that is seated in a first part (17) of the body of said thermostatic mixing valve (10) and that can be biased into one or more cavities (90) which face it that are located in a second part (12) of the body of said thermostatic mixing valve (10).

## Patentansprüche

1. Thermostatisches Mischventil (10), umfassend:
einen Grundkörper (17), der zwei Zufuhröffnungen (30, 32) für Kaltwasser bzw. Warmwasser hat;
einen drehbaren Griffkörper (12, 27), der an dem Grundkörper (17) montiert ist und mit einer ersten Ventilfläche mit einem Kaltwasser- und einem Warmwasser-Einlaßdurchgang (38, 40) wirkverbunden ist, die angrenzend an die zwei Zufuhröffnungen (30, 32) wirkpositioniert sind, um den Volumenstrom in das thermostatische Mischventil (10) zu steuern; und
ein thermostatisches Element (70), das mit einer bewegbaren zweiten Ventilfläche wirkverbunden ist, die zwischen einem ersten und einem zweiten Sitz (50, 56) bewegbar ist, um in Antwort auf die Temperatur der Flüssigkeit in einer Mischkammer (80) den Relativstrom von den Kaltwasser- und Warmwasser-Einlaßdurchgängen (38, 40) einzustellen;
wobei die Öffnungen (30, 32) und die erste Ventilfläche in zwei konzentrisch angebrachten Ventilscheiben (22, 24) integriert sind, die mit Bezug zueinander gedreht werden können und die jeweils mit zwei Öffnungen für den gesteuerten Durchgang der Flüssigkeit durch die zwei Ventilscheiben (22, 24) versehen sind;
**dadurch gekennzeichnet, daß** die zwei Öffnungen in einer der Ventilscheiben (22, 24) eine identische Form und Größe haben, mit zwei verschiedenen Abschnitten, um den gesamten Einstellbereich, der durch die relative Drehung der Ventilscheiben (22, 24) festgelegt ist, in wenigstens zwei aufeinanderfolgende Einstellbereiche zu unterteilen, wobei der erste Einstellbereich, angrenzend der Absperrposition, durch einen ersten Einlaßdurchgang-Öffnungsabschnitt (85; 87) von begrenztem Durchfluß in der jeweiligen Öffnung festgelegt ist, und der zweite Einstellbereich, nach dem ersten, durch einen zweiten Einlaßdurchgang-Öffnungsabschnitt (84) mit einem vergrößerten Querschnitt in der jeweiligen Öffnung gebildet ist.

2. Thermostatisches Mischventil (10) nach Anspruch 1, wobei ein gesonderter dritter Einstellzwischenbereich zwischen dem ersten (85; 87) und dem zweiten (84) Einlaßdurchgang-Öffnungsabschnitt eingefügt ist.

3. Thermostatisches Mischventil (10) nach Anspruch 1, wobei die Öffnungen jeweils in der Form eines langgestreckten Schlitzes sind, mit einer Anfangslänge reduzierter Breite, die den ersten Einlaßdurchgang-Öffnungsabschnitt (85) bildet, und einer Schlußlänge vergrößerter Breite, die den zweiten Einlaßdurchgang-Öffnungsabschnitt (84) bildet, wobei eine gesonderte Zwischenlänge einer Zwischenbreite vorgesehen ist, die zwischen der ersten reduzierten Breite des ersten Einlaßdurchgang-Öffnungsabschnitts (85) und der zweiten vergrößerten Breite des zweiten Einlaßdurchgang-Öffnungsabschnitts (84) liegt.

4. Thermostatisches Mischventil (10) nach Anspruch 1, wobei die Öffnungen jeweils in der Form eines langgestreckten Schlitzes großer und gleichbleibender Breite sind, wobei der Schlitz einen Abschnitt hat, der sich vollständig durch die Ventilscheibe (24) hindurch erstreckt und den zweiten Einlaßdurchgang-Öffnungsabschnitt (84) bildet, und einen gestuften Abschnitt (87) begrenzter Tiefe aufweist, der sich nicht vollständig durch die Ventilscheibe (24) hindurch erstreckt und den ersten Einlaßdurchgang-Öffnungsabschnitt bildet, wobei der Schlitz ferner einen Zwischenabschnitt (88) hat, dessen Tiefe größer als die des gestuften Abschnitts (87) ist, der sich aber nicht vollständig durch die Ventilscheibe (24) hindurch erstreckt, wobei der Zwischenabschnitt (88) zwischen dem zweiten Einlaßdurchgang-Öffnungsabschnitt (84) und dem gestuften Abschnitt (87) eingefügt ist.

5. Thermostatisches Mischventil (10) nach Anspruch 1, wobei die Öffnungen jeweils einen breiten Abschnitt haben, der sich vollständig durch die Ventilscheibe (24) hindurch erstreckt und den zweiten Einlaßdurchgang-Öffnungsabschnitt (84) bildet, und einen gestuften Abschnitt (88) begrenzter Tiefe, der dem engen ersten Einlaßdurchgang-Öffnungsabschnitt (85) benachbart liegt.

6. Thermostatisches Mischventil (10) nach einem der vorhergehenden Ansprüche, wobei sichtbare Anzeigen an dem thermostatischen Mischventil (10) angebracht sind, die den Benutzer darüber informieren, in welchem Einstellbereich das thermostatische Mischventil (10) arbeitet.

7. Thermostatisches Mischventil (10) nach einem der Ansprüche 1 bis 5, wobei mindestens eine elastische Auslöseeinrichtung vorgesehen ist, die geeignet ist, dem Benutzer beim Übergang von einem Einstellbereich zu einem anderen Einstellbereich des thermostatischen Mischventils (10) eine Sinneswarnung zu geben, wobei die elastische Auslöseeinrichtung zwischen sich relativ bewegenden Teilen des thermostatischen Mischventils (10) eingesetzt ist.

8. Thermostatisches Mischventil (10) nach Anspruch 7, wobei die elastische Auslöseeinrichtung eine mittels einer Feder (89) vorgespannte Kugel (188) aufweist, welche in einem ersten Teil (17) des Grundkörpers des thermostatischen Mischventils (10) sitzt und die in eine oder mehrere ihr zugewandte Vertiefungen (90) vorgespannt werden kann, welche in einem zweiten Teil (12) des Grundkörpers des thermostatischen Mischventils (10) vorgesehen sind.

## Revendications

1. Mitigeur thermostatique (10), comprenant :
une base (17) ayant deux orifices d'alimentation (30, 32) pour l'eau froide et l'eau chaude, respectivement ;
un corps de poignée rotatif (12, 27) monté sur ladite base (17) et raccordé de manière opérationnelle à une première surface de robinetterie avec un passage d'entrée d'eau froide et d'eau chaude (38, 40) à travers celle-ci qui sont positionnés de manière opérationnelle adjacents auxdits deux orifices d'alimentation (30, 32) pour commander le débit volumétrique à l'intérieur dudit mitigeur thermostatique (10) ; et
un élément thermostatique (70) raccordé de manière opérationnelle à une seconde surface de robinetterie mobile qui est mobile entre les premier et second logements (50, 56) pour commander le débit relatif depuis lesdits passages d'entrée d'eau froide et chaude (38, 40) en réponse à la température de fluide dans une chambre de mélange (80) ;
lesdits orifices (30, 32) et ladite première surface de robinetterie étant incorporés dans deux plaques de soupape montées de manière concentrique (22, 24) qui peuvent être tournées l'une par rapport à l'autre et qui sont chacune munies de deux ouvertures à travers celles-ci pour le passage commandé du fluide à travers lesdites deux plaques de soupape (22, 24) ;
**caractérisé en ce que** lesdites deux ouvertures dans une desdites plaques de soupape (22, 24) ont une forme et une taille identiques, avec deux sections distinctes de façon à subdiviser l'intégralité du champ de régulation déterminé par la rotation relative desdites plaques de soupape (22, 24) à l'intérieur d'au moins deux champs de régulation successifs, le premier champ de régulation, adjacent à la position fermée, étant déterminé dans l'ouverture respective par une première section d'ouverture de passage d'entrée (85 ; 87) de débit restreint, et le deuxième champ de régulation, après le premier, étant formé dans l'ouverture respective par une seconde section d'ouverture de passage d'entrée (84) ayant une section transversale élargie.

2. Mitigeur thermostatique (10) selon la revendication 1, dans lequel un troisième champ de régulation intermédiaire individuel est interposé entre lesdites première (85 ; 87) et deuxième (84) sections d'ouverture de passage d'entrée.

3. Mitigeur thermostatique (10) selon la revendication 1, dans lequel lesdites ouvertures sont chacune sous la forme d'une fente allongée ayant une longueur initiale de largeur réduite formant ladite première section d'ouverture de passage d'entrée (85) et une longueur finale de largeur élargie formant ladite seconde section d'ouverture de passage d'entrée (84), une longueur intermédiaire individuelle étant fournie entre la première largeur réduite de ladite première section d'ouverture de passage d'entrée (85) et la seconde largeur élargie de ladite seconde section d'ouverture de passage d'entrée (84).

4. Mitigeur thermostatique (10) selon la revendication 1, dans lequel lesdites ouvertures sont chacune sous la forme d'une fente allongée de largeur importante et uniforme, ladite fente ayant une section s'étendant complètement à travers ladite plaque de soupape (24) et formant ladite seconde section d'ouverture de passage d'entrée (84), et une section étagée (87) de profondeur limitée ne traversant pas complètement ladite plaque de soupape (24) et formant ladite première section d'ouverture de passage d'entrée, ladite fente ayant en outre une section intermédiaire (88) de profondeur plus importante que celle de ladite section étagée (87), mais ne traversant pas complètement ladite plaque de soupape (24), ladite section intermédiaire (88) étant interposée entre ladite seconde section d'ouverture de passage d'entrée (84) et ladite section étagée (87).

5. Mitigeur thermostatique (10) selon la revendication 1, dans lequel lesdites ouvertures ont chacune une section large s'étendant complètement à travers ladite plaque de soupape (24) et formant ladite seconde section d'ouverture de passage d'entrée (84), et une section étagée (88) de profondeur limitée adjacente à ladite première section d'ouverture de passage d'entrée étroite (85).

6. Mitigeur thermostatique (10) selon l'une quelconque des revendications précédentes, dans lequel des indicateurs visibles sont montés sur ledit mitigeur thermostatique (10) qui informent l'utilisateur du champ de régulation dans lequel le mitigeur thermostatique (10) fonctionne.

7. Mitigeur thermostatique (10) selon l'une quelconque des revendications 1 à 5, dans lequel au moins un dispositif de libération élastique pouvant être adapté pour donner un avertissement sensoriel à l'utilisateur du passage d'un champ de régulation vers un autre champ de régulation du mitigeur thermostatique (10) est fourni, ledit dispositif de libération élastique étant inséré entre des parties relativement mobiles dudit mitigeur thermostatique (10).

8. Mitigeur thermostatique (10) selon la revendication 7, dans lequel ledit dispositif de libération élastique comprend une bille sollicitée (188) par ressort (89) qui est logée dans une première partie (17) du corps dudit mitigeur thermostatique (10) et qui peut être sollicitée à l'intérieur d'une ou plusieurs cavités (90) qui lui font face qui sont situées dans une seconde partie (12) du corps dudit mitigeur thermostatique (10).
